# EUROPEAN PATENT APPLICATION

(11) **EP 2 985 501 A1**
(43) Date of publication of application: **17.02.2016**
(21) Application number: 14782542.6
(22) Date of filing: 05.03.2014
(51) Int. Cl.: F16L 11/133, B63B 27/24, F16L 1/12

(54) **MARINE HOSE LINE AND MARINE HOSE**

(30) Priority: 09.04.2013 JP 2013080900
(71) Applicant: The Yokohama Rubber Co., Ltd., Minato-ku Tokyo 105-8685 (JP)
(72) Inventor: ONO, Shunichi, Hiratsuka-shi Kanagawa 254-8601 (JP)
(74) Representative: Dilg, Haeusler, Schindelmann Patentanwaltsgesellschaft mbH
(86) International application number: PCT/JP2014/055636
(87) International publication number: WO 2014/167921

(57) **Abstract**

Provided is a marine hose line and a marine hose that avoid increasing the diameter and reducing the flexibility of the hose body portion, and is capable of preventing the marine hose line from sinking to a water bottom, even if an end portion of the marine hose line let out onto water from a take-up reel is cut off from a coupling and falls to the surface of the water.

A sinking-resisting device 8 installed on an end portion on the take-up reel 14 side of the marine hose line L, includes a sinking-resisting body 10 installed on the outer surface of the marine hose line L in a folded-up state, and an expander 11 that expands the folded-up sinking-resisting body 10. After the end portion of the marine hose line L is cut off from the coupling 15, the expander 11 is activated to expand the folded-up sinking-resisting body 10, and the drag from the expanded sinking-resisting body 10 in the water prevents the end portion of the marine hose line L from sinking.

## Description

### TECHNICAL FIELD

The present invention relates to a marine hose line and marine hose; and particularly relates to a marine hose line and a marine hose that avoid increasing the diameter and reducing the flexibility of the hose body portion, and is capable of preventing the marine hose line from sinking to a water bottom, even if an end portion of the marine hose line let out onto water from a take-up reel is cut off from a coupling and falls to the surface of the water.

### BACKGROUND

Floating-type marine hoses equipped with a buoyant layer made of a sponge or other buoyancy material serve as marine hoses connected between a tanker at sea and onshore facilities for transporting crude oil and the like. Multiple connected marine hoses form a marine hose line. Marine hose lines are stored wound around take-up reels installed on tankers and floating production, storage and offloading systems (FPSO) (See Patent Document 1, for example). During use, marine hose lines wound up around a take-up reel are let out from the take-up reel and extended onto water.

Sometimes during emergency situations, such marine hose lines are cut off from the coupling at the end portion on the take-up reel side, while still let out from the take-up reel and extending onto water. The marine hoses have considerable weight, and the take-up reels are disposed at positions of considerable height above the surface of water. Hence, the end portion of marine hose lines cut off from coupling sinks to a position deep below the surface of the water.

The buoyant layer of a marine hose is formed of sponge or other deformable buoyancy material. Thus, when the end portion of a marine hose line sinks to a certain depth of water, the buoyancy material is crushed and buoyancy is lost. When buoyancy of the buoyant layer is lost, the end portion of the marine hose line sinks further and the buoyancy material is further crushed. The extent of crushing of the buoyancy material is then magnified and further buoyancy is lost. Thus, when the end portion of the marine hose line sinks to a certain depth of water, there is no buoyancy left to float the end portion of the marine hose line; in other words, auto-submersion occurs. When auto-submersion occurs, the marine hose line sinks to the water bottom.

The measures taken to prevent such marine hose lines from sinking are to use a buoyancy material that does not easily deform from water pressure for the marine hose constituting the end portion on the take-up reel side, and to provide a larger quantity of buoyancy material from the start. However, these measures result in loss of flexibility in the marine hose, which makes it unsuitable for winding up around the take-up reel. In addition, if a larger quantity of buoyancy material is used, the problem is that the outer diameter of the hose body portion is enlarged, resulting in an excessively large wind-up outer diameter when it is wound around the take-up reel.

### PRIOR ART DOCUMENT

### Patent Document

Patent Document 1: Japanese Unexamined Patent Application Publication No. 2008-215483A

### SUMMARY OF THE INVENTION

### Problem to be Solved by the Invention

An object of the present invention is to provide a marine hose line and a marine hose that avoid increasing the diameter and reducing the flexibility of the hose body portion, and is capable of preventing the marine hose line from sinking to a water bottom, even if an end portion of the marine hose line let out onto water from a take-up reel is cut off from a coupling and falls to the surface of the water.

### Means to Solve the Problem

In order to achieve the object, a marine hose line of the present invention is a marine hose line let out from a take-up reel and extended onto water, the marine hose line comprising a sinking-resisting device installed on an end portion of the marine hose line on the take-up reel side. The sinking-resisting device includes a sinking-resisting body installed on the outer surface of the marine hose line in a folded-up state and an expander that expands the folded-up sinking-resisting body. After the end portion of the marine hose line is cut off from a coupling, the expander is activated to expand the folded-up sinking-resisting body, and the drag from the expanded sinking-resisting body in the water prevents the end portion of the marine hose line from sinking.

A marine hose of the present invention is a marine hose constituting an end portion on the take-up reel side of a marine hose line, the marine hose comprising a sinking-resisting device including a sinking-resisting body installed on the outer surface of a marine hose in a folded-up state, and an expander that expands the folded-up sinking-resisting body. After the end portion of the marine hose line is cut off from a coupling, the expander is activated to expand the folded-up sinking-resisting body, and the drag from the expanded sinking-resisting body in the water prevents the end portion of the marine hose line from sinking.

### EFFECT OF THE INVENTION

According to a marine hose line of the present invention, by using a sinking-resisting device including a sinking-resisting body installed in a folded-up state on the outer surface of a marine hose line, and an expander that expands the folded-up sinking-resisting body, it is possible to avoid increasing the diameter and reducing the flexibility of the hose body portion. Therefore, after the end portion of the marine hose line is cut off from a coupling, the expander is activated to expand the folded-up sinking-resisting body, and the drag from the expanded sinking-resisting body in the water prevents the end portion of the marine hose line from sinking. Thus, it is possible to prevent the end portion of the marine hose line on the take-up reel side from sinking to a water bottom, even if it falls to the surface of the water from a high position.

According to the present invention, if a marine hose line is connected to the position constituting the end portion of the marine hose line, it is possible to achieve the above effects with a marine hose line of the present invention.

### BRIEF DESCRIPTION OF THE DRAWING(S)

FIG. 1 is an explanatory view illustrating a marine hose line and marine hose of the present invention.
FIG. 2 is an explanatory view illustrating an end portion on a take-up reel side of the marine hose line in FIG. 1.
FIG. 3 is a vertical cross-sectional view illustrating the marine hose in FIG. 2.
FIG. 4 is an explanatory view illustrating the end portion on the take-up reel side of the marine hose line in FIG. 1 cut off from a coupling.
FIG. 5 is an explanatory view illustrating an expanded sinking-resisting body.
FIG. 6 is an explanatory view illustrating a modified example of a sinking-resisting body.

### BEST MODE FOR CARRYING OUT THE INVENTION

The following is a description of a marine hose line and marine hose of the present invention based on the embodiments illustrated in the drawings.

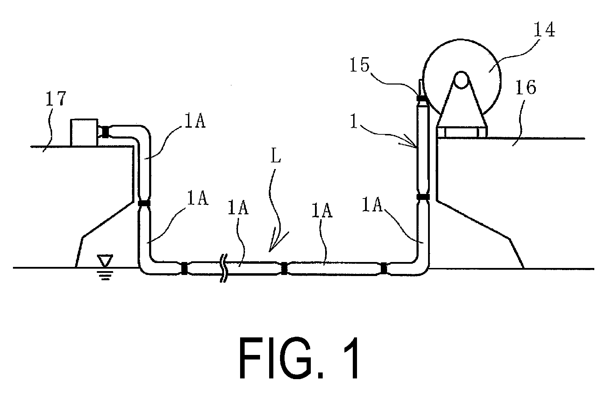

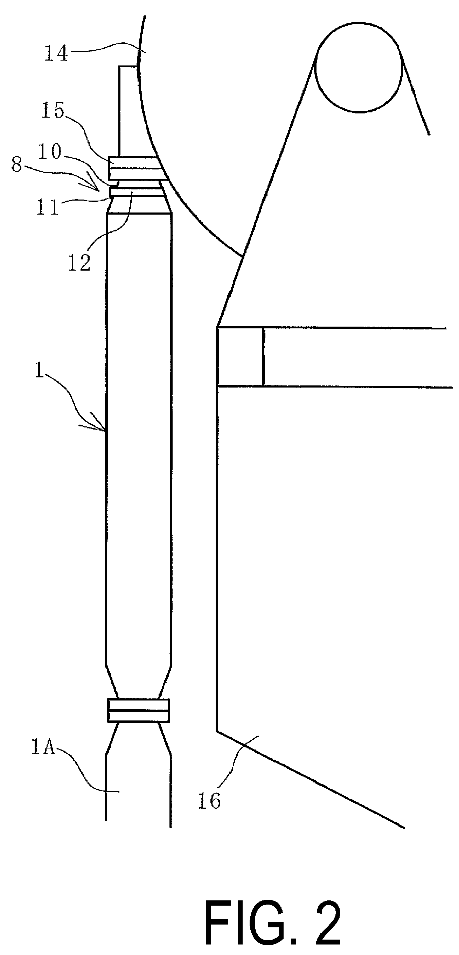

As illustrated by FIGS. 1 to 3, a marine hose line L of the present invention is formed by connecting a plurality of marine hoses 1, 1A, and is let out from a take-up reel 14 and extended onto water. In this embodiment, the marine hose line L is formed between an FPSO 16 and a tanker 17. A take-up reel 14 is installed on the FPSO 16, and the marine hoses 1, 1A forming the marine hose line L are let out and extended onto water. A marine hose 1 of the present invention constitutes the end portion of the marine hose line L on the take-up reel 14 side, and has a configuration different from that of the other marine hose 1A.

The marine hose line L is equipped with a sinking-resisting device 8 installed on the end portion on the take-up reel 14 side. In other words, a marine hose 1 of the present invention is equipped with a sinking-resisting device 8.

The marine hose 1 is equipped with connection fittings 2 on both longitudinal ends with a coupling 15 installed on one end side. One longitudinal end of the marine hose 1 is connected to a coupling 15 installed on the take-up reel 14 via the coupling 15. The connection fittings 2 are constituted by nipples 2b equipped with a flange 2a on one end. The marine hoses 1, 1A are connected by a pair of connection fittings 2.

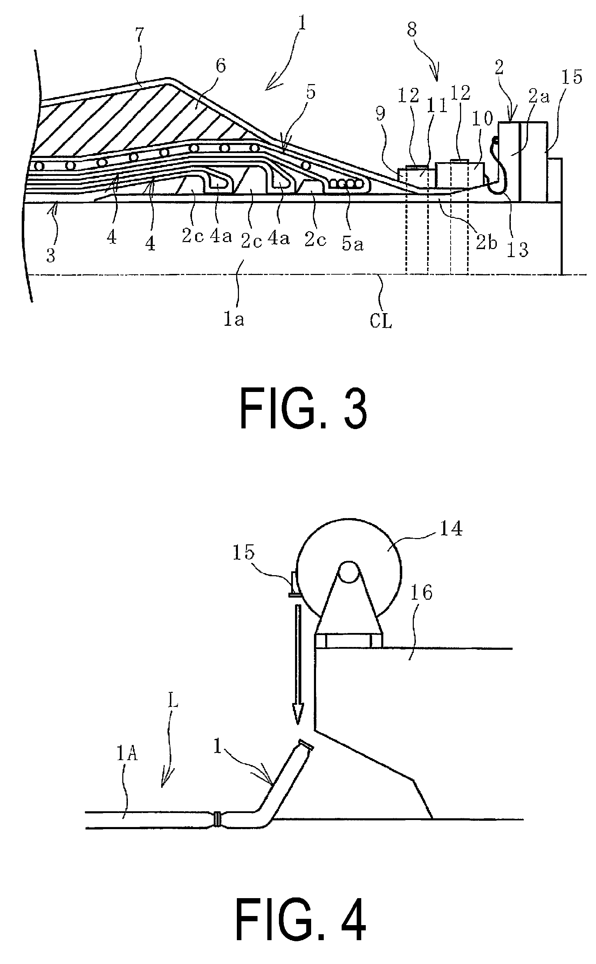

An inner surface rubber layer 3, a main reinforcing layer 4 and a main body wire layer 5 are layered in that order winding around the outer circumference of the nipples 2b towards the outer circumferential side, and the outermost circumference is covered with a cover rubber layer 7. The inner circumferential side of the inner surface rubber layer 3 serves as a fluid flow path 1a. The chain dotted line CL in FIG. 3 is a center line that extends in the axial direction of the marine hose 1.

A buoyant layer 6 formed of sponge or other buoyancy material is provided between the layers of the main body wire layer 5 and the cover rubber layer 7. That is, the present invention may be used for a floating-type marine hose 1.

The inner surface rubber layer 3 that makes contact with fluid being transported is constituted by an acrylonitrile rubber with good oil resistance or the like, and the main body wire layer 5 is constituted by a metal wire wound spirally with predetermined spacing on the rubber layer on the outer circumference of the main reinforcing layer 4. The main reinforcing layer 4 is constituted by layering a plurality of reinforcing cord layers made by covering reinforcing cord with rubber.

Nipple wires 4a, 5a on one end portion of the main reinforcing layer 4 and main body wire layer 5 respectively are fixed to the nipple 2b by a fixing ring 2c or the like protruding from the outer circumferential surface of the nipple 2b. The cover rubber layer 7 is constituted by rubber or other non-water-permeable material, with a highly visible line pattern or the like on the surface. Furthermore, the marine hose 1 is not limited to the configuration illustrated in FIG. 3.

The sinking-resisting device 8 is installed, for example, on the outer circumferential side or flange 2a of the nipple 2b of a connection fitting 2, or on the hose body portion (at a section other than the connection fitting 2). The number of sinking-resisting devices 8 installed on a marine hose 1 is not particularly limited, and may be singular or plural.

As illustrated in FIG. 3, the sinking-resisting device 8 has a sinking-resisting body 10 installed in a compact folded-up state on the outer surface of the marine hose line L, and an expander 11 that expands the folded-up sinking-resisting body 10. A drag chute formed of a strong synthetic resin fiber membrane, for example, may be used as the sinking-resisting body 10. The expander 11 is equipped with a gas cylinder for storing pressurized air and a nozzle for injecting pressurized air.

The sinking-resisting device 8 also has a sensor 9 that activates the expander 11. An acceleration sensor or a cut-off sensor that detects when a coupling 15 is cut off, for example, may be used for the sensor 9. If an acceleration sensor is used, the expander 11 is activated when the sensor 9 detects a preset acceleration (impact). If a cut-off sensor is used, the expander 11 is activated when it detects that the end portion of the marine hose line L is cut off from the coupling 15.

In this embodiment, the folded-up sinking-resisting body 10 is installed on the outer surface of a marine hose 1 (connection fitting 2 or hose body portion) using a fitting 12 such as a tightening belt. The sensor 9 and expander 11 are housed in a waterproof case, and are installed on the outer surface of a marine hose 1, using the fitting 12 such as a tightening belt, bolts, or adhesive.

Furthermore, the sinking-resisting body 10 is connected to a marine hose 1 with a cord 13. A steel cord rope, steel chain, resin rope or the like may be used for the cord 13.

As illustrated in FIG. 4, sometimes during emergency situations, the marine hose line L is cut off from a coupling 15 at the end portion on the take-up reel 14 side, while still let out from the take-up reel 14 and extending onto water. The marine hose 1 has considerable weight, and the take-up reel 14 is disposed at a position of considerable height above the surface of water. Hence, the end portion of a marine hose line L cut off from a coupling 15 will sink to a position deep below the surface of the water.

The buoyant layer 6 of the marine hoses 1, 1A is formed of sponge or other deformable buoyancy material. Thus, when the end portion of the marine hose line L sinks to a certain depth of water, the buoyancy material is crushed and buoyancy is lost. When buoyancy of the buoyant layer 6 is lost, the end portion of the marine hose line L sinks further and the buoyancy material is further crushed. The extent of crushing of the buoyancy material is then magnified and further buoyancy is lost. Consequently, when the end portion of the marine hose line L sinks to a certain depth of water, auto-submersion occurs, and the marine hose line L links to the water bottom.

However, in the present invention, after the end portion of the marine hose line L is cut off from a coupling 15, the expander 11 is then activated to expand the folded-up sinking-resisting body 10. If, for example, an acceleration sensor is used for the sensor 9, the sensor 9 detects acceleration (impact) when the end portion of the marine hose line L falls to the surface of the water, and when this acceleration is detected, the sensor 9 activates the expander 11, and expands the folded-up sinking-resisting body 10 by injecting compressed air from the gas cylinder. When the sinking-resisting body 10 expands, for example, the fitting 12 fixing the folded-up sinking-resisting body 10 to the marine hose 1 is disconnected by the expanding force. The sensor 9 is preset so that the expander 11 is activated when acceleration is detected equal to the acceleration generated when the end portion of the marine hose line L falls to the surface of the water.

If a cut-off sensor is used for the sensor 9, when the end portion of the marine hose line L is cut off from the coupling 15 of the take-up reel 14, the sensor 9 activates the expander 11, and expands the folded-up sinking-resisting body 10 by injecting compressed air from the gas cylinder.

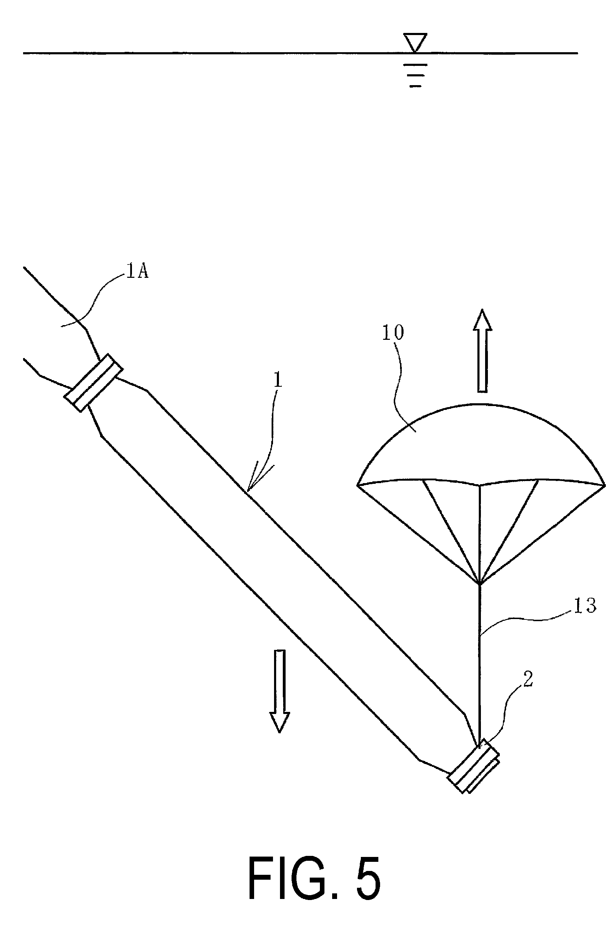

When a drag chute is used for the sinking-resisting body 10, as illustrated in FIG. 5, the expanded sinking-resisting body 10 is connected to a marine hose 1 via the cord 13. Thus, sinking of the end portion of the marine hose line L is prevented by the drag from the expanded sinking-resisting body 10 in the water. That is, before auto-submersion occurs, any further sinking is prevented by the expanded sinking-resisting body 10, making it possible to prevent the marine hose line L from sinking to the water bottom. Accordingly, it is possible to prevent the marine hose line L from sinking to a water bottom, even if the end portion of the marine hose line L on the take-up reel 14 side falls to the surface of the water from a high position.

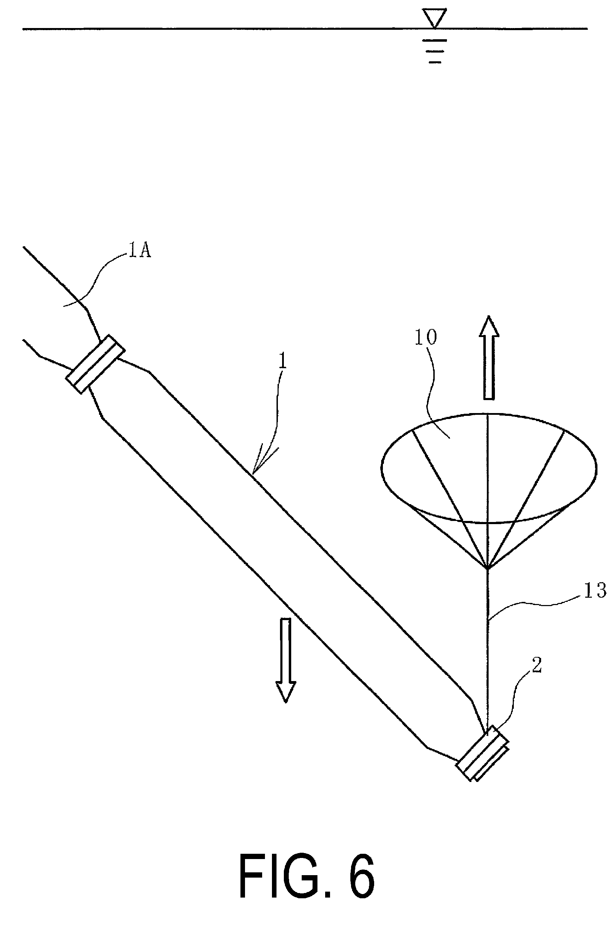

When a floating body filled with compressed air is used as the sinking-resisting body 10, as illustrated in FIG. 6, the expanded (inflated) sinking-resisting body 10 is connected to a marine hose 1 via the cord 13. Thus, sinking of the end portion of the marine hose line L is prevented by the drag from the expanded sinking-resisting body 10 in the water. Furthermore, the sinking-resisting body 10 generates buoyancy, and this buoyancy is conferred to the end portion of the marine hose line L. In this manner, before auto-submersion occurs, any further sinking is prevented by the expanded sinking-resisting body 10, making it possible to prevent the marine hose line L from sinking to the water bottom.

The sinking-resisting device 8 used in the present invention comprises a folded-up sinking-resisting body 10,and an expander 11 that expands the sinking-resisting body 10, and thus provides a compact non-bulky configuration. Therefore, it is possible to avoid increasing the diameter of the hose body portion. As a result, there is no loss in the flexibility of the marine hose 1, and thus it is possible to prevent loss of operability.

In addition the buoyant layer 6 of the marine hose 1 is not required to be of a significant volume in order to prevent occurrence of auto-submersion, so it is also possible to avoid the problem of wasteful crushing of the buoyant layer 6 when the take-up reel 14 is wound up. Furthermore, there is no loss over time in the drag from the sinking-resisting body 10 in the water, as there is with buoyancy of the buoyant layer 6.

According to the marine hose 1 of present invention, if the marine hose 1 is connected at the position constituting the end portion of the marine hose line L, it is possible to achieve the above effects with a marine hose line L of the present invention.

### Reference Numerals

1, 1A Marine hose
1a Fluid flow path
2 Connection fitting
2a Flange
2b Nipple
2c Fixing ring
3 Inner surface rubber layer
4 Main reinforcing layer
4a Nipple wire
5 Main body wire layer
5a Nipple wire
6 Buoyant layer
7 Cover rubber layer
8 Sinking-resisting device
9 Sensor
10 Sinking-resisting body
11 Expander
12 Fitting
13 Cord
14 Take-up reel
15 Coupling
16 FPSO (Floating Production, Storage and Offloading System)
17 Tanker
L Marine hose line

## Claims

1. A marine hose line let out from a take-up reel and extended onto water, the marine hose line comprising:
a sinking-resisting device installed on an end portion of the marine hose line on the take-up reel side,
wherein the sinking-resisting device includes a sinking-resisting body installed on the outer surface of the marine hose line in a folded-up state, and an expander that expands the folded-up sinking-resisting body;
after the end portion of the marine hose line is cut off from a coupling, the expander being activated to expand the folded-up sinking-resisting body, and drag from the expanded sinking-resisting body in water preventing the end portion of the marine hose line from sinking.

2. The marine hose line according to claim 1, wherein
the sinking-resisting device includes an acceleration sensor that activates the expander when the acceleration sensor detects a preset acceleration.

3. The marine hose line according to claim 1, wherein
the sinking-resisting device includes a coupling cut-off sensor that activates the expander when the cut-off sensor detects that the end portion of the marine hose line is cut off from the coupling.

4. The marine hose line according to any one of claims 1 to 3, wherein
the expanded sinking-resisting body is a floating body, and generates buoyancy in water.

5. A marine hose constituting an end portion on a take-up reel side of a marine hose line, the marine hose comprising:
a sinking-resisting device including
a sinking-resisting body installed on the outer surface of a marine hose in a folded-up state, and
an expander that expands the folded-up sinking-resisting body;
after the end portion of the marine hose line is cut off from a coupling, the expander being activated to expand the folded-up sinking-resisting body, and drag from the expanded sinking-resisting body in water preventing the end portion of the marine hose line from sinking.

6. The marine hose according to claim 5, wherein
the sinking-resisting device includes an acceleration sensor that activates the expander when the acceleration sensor detects a preset acceleration.

7. A marine hose according to claim 5, wherein
the sinking-resisting device includes a coupling cut-off sensor that activates the expander when the cut-off sensor detects that the end portion of the marine hose line is cut off from the coupling.

8. A marine hose according to any one of claims 5 to 7, wherein
the expanded sinking-resisting body is a floating body, and generates buoyancy in water.
